# EUROPEAN PATENT SPECIFICATION

(11) **EP 3 221 119 B1**
(45) Date of publication and mention of the grant of the patent: **30.09.2020**
(21) Application number: 15860981.8
(22) Date of filing: 17.11.2015
(51) Int. Cl.: B29C 48/42, B29C 48/76, B29B 17/00, B29C 48/00, B29C 48/60, B29B 13/06

(54) **METHOD FOR MANUFACTURING BULKED CONTINUOUS FILAMENT**
VERFAHREN ZUR MASSENHERSTELLUNG VON ENDLOSFILAMENTEN
PROCÉDÉ DE FABRICATION DE FILAMENT CONTINU GONFLANT

(30) Priority: 18.11.2014 US 201414546819
(43) Date of publication of application: 27.09.2017
(60) Divisional application: 18188891.8
(73) Proprietor: Mohawk Industries, Inc., Marietta, Georgia 30062 (US)
(72) Inventor: CLARK, Thomas R., Chattanooga, Tennessee 37415 (US)
(74) Representative: Schacht, Benny Marcel Corneel
(86) International application number: PCT/US2015/061145
(87) International publication number: WO 2016/081495

(56) References cited:
- US-A1- 2007 261 777
- US-A1- 2009 039 542
- US-A1- 2013 320 581
- US-B1- 6 784 214
- US-B1- 8 597 553
- US-B1- 8 597 553
- JAECKER M: "DAS KONISCHE KONZEPT DER ZUKUNFT//VORTEILE DER NEGATIV-KONISCHEN GANGTIEFE BEI DOPPELSCHNECKENEXTRUDERN", KUNSTSTOFFE, CARL HANSER VERLAG, MUNCHEN, DE, vol. 90, no. 12, 1 December 2000 (2000-12-01), page 64,66, XP000976101, ISSN: 0023-5563

## Description

### BACKGROUND

Because pure virgin PET polymer is more expensive than recycled PET polymer, and because of the environmental benefits associated with using recycled polymer, it would be desirable to be able to produce bulked continuous carpet filament from 100% recycled PET polymer (e.g., PET polymer from post-consumer PET bottles). Document US8597553 discloses a method comprising the steps A to E of claim 1 and further discloses a conical twin screw extruder with undefined relative rotation direction of both screws.

### SUMMARY

The method according to the invention is defined in claim 1. Preferred embodiments are defined in the dependent claims.

### BRIEF DESCRIPTION OF THE DRAWINGS

Having described various embodiments in general terms, reference will now be made to the accompanying drawings, which are not necessarily drawn to scale, and wherein:

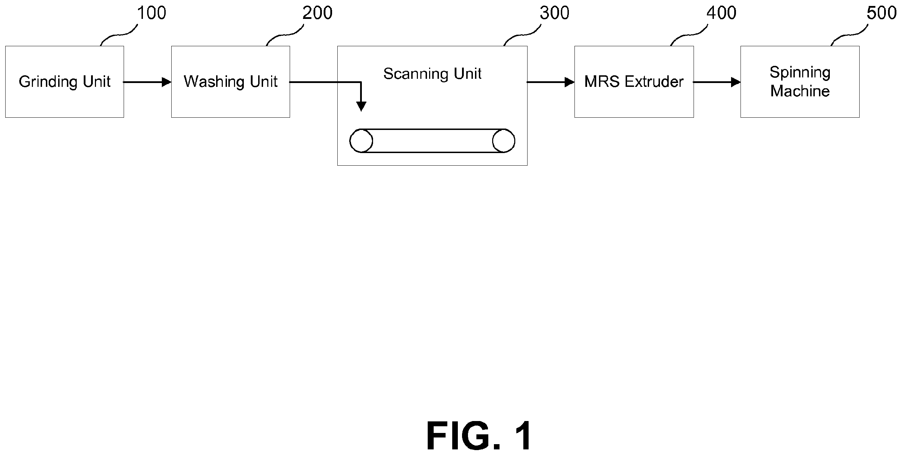

FIG. 1 depicts a process flow, according to a particular embodiment, for manufacturing bulked continuous carpet filament.
FIG. 2 is a perspective view of an MRS extruder that is suitable for use in the process of FIG. 1.
FIG. 3 is a cross-sectional view of an exemplary MRS section of the MRS extruder of FIG. 2.
FIG. 4 depicts a process flow depicting the flow of polymer through an MRS extruder and filtration system according to a particular embodiment.
FIG. 5 is a high-level flow chart of a method, according to various embodiments, of manufacturing bulked continuous carpet filament.

### DETAILED DESCRIPTION OF VARIOUS EMBODIMENTS

Various embodiments will now be described in greater detail. It should be understood that the invention may be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

### I. Overview

New processes for making fiber from recycled polymer (e.g., recycled PET polymer) are described below. In various embodiments, this new process: (1) is more effective than earlier processes in removing contaminates and water from the recycled polymer; and/or (2) does not require the polymer to be melted and cooled as many times as in earlier processes. In at least one embodiment, the improved process results in a recycled PET polymer having a polymer quality that is high enough that the PET polymer may be used in producing bulked continuous carpet filament from 100% recycled PET content (e.g., 100% from PET obtained from previously used PET bottles). In particular embodiments, the recycled PET polymer has an intrinsic viscosity of at least about 0.79 dL/g (e.g., of between about 0.79 dL/g and about 1.00 dL/g).

### II. More Detailed Discussion

A BCF (bulked continuous filament) manufacturing process, according to a particular embodiment, may generally be broken down into three steps: (1) preparing flakes of PET polymer from post-consumer bottles for use in the process; (2) passing the flakes through an extruder that melts the flakes and purifies the resulting PET polymer; and (3) feeding the purified polymer into a spinning machine that turns the polymer into filament for use in manufacturing carpets. These three steps are described in greater detail below.

### STEP 1: Preparing Flakes of PET Polymer from Post-Consumer Bottles

In a particular embodiment, the step of preparing flakes of PET polymer from post-consumer bottles comprises: (A) sorting post-consumer PET bottles and grinding the bottles into flakes; (B) washing the flakes; and (C) identifying and removing any impurities or impure flakes.

### A. Sorting Post-Consumer PET bottles and Grinding the Bottles into Flakes

In particular embodiments, bales of clear and mixed colored recycled post-consumer (e.g., "curbside") PET bottles (or other containers) obtained from various recycling facilities make-up the post-consumer PET containers for use in the process. In other embodiments, the source of the post-consumer PET containers may be returned 'deposit' bottles (e.g., PET bottles whose price includes a deposit that is returned to a customer when the customer returns the bottle after consuming the bottle's contents). The curbside or returned "post-consumer" or "recycled" containers may contain a small level of non-PET contaminates. The contaminants in the containers may include, for example, non-PET polymeric contaminants (e.g., PVC, PLA, PP, PE, PS, PA, etc.), metal (e.g., ferrous and non-ferrous metal), paper, cardboard, sand, glass or other unwanted materials that may find their way into the collection of recycled PET. The non-PET contaminants may be removed from the desired PET components, for example, through one or more of the various processes described below.

In particular embodiments, smaller components and debris (e.g., components and debris greater than 2 inches in size) are removed from the whole bottles via a rotating trammel. Various metal removal magnets and eddy current systems may be incorporated into the process to remove any metal contaminants. Near Infra-Red optical sorting equipment such as the NRT Multi Sort IR machine from Bulk Handling Systems Company of Eugene, Oregon, or the Spyder IR machine from National Recovery Technologies of Nashville, Tennessee, may be utilized to remove any loose polymeric contaminants that may be mixed in with the PET flakes (e.g., PVC, PLA, PP, PE, PS, and PA). Additionally, automated X-ray sorting equipment such as a VINYLCYCLE machine from National Recovery Technologies of Nashville, Tennessee may be utilized to remove remaining PVC contaminants.

In particular embodiments, a binary segregation of the clear materials from the colored materials is achieved using automated color sorting equipment equipped with a camera detection system (e.g., an Multisort ES machine from National Recovery Technologies of Nashville, Tennessee). In various embodiments, manual sorters are stationed at various points on the line to remove contaminants not removed by the sorter and any colored bottles. In particular embodiments, the sorted material is taken through a granulation step (e.g., using a 50B Granulator machine from Cumberland Engineering Corporation of New Berlin, Wisconsin) to size reduce (e.g., grind) the bottles down to a size of less than one half of an inch. In various embodiments, the bottle labels are removed from the resultant "dirty flake" (e.g., the PET flakes formed during the granulation step) via an air separation system prior to entering the wash process.

### B. Washing the Flakes

In particular embodiments, the "dirty flake" is then mixed into a series of wash tanks. As part of the wash process, in various embodiments, an aqueous density separation is utilized to separate the olefin bottle caps (which may, for example, be present in the "dirty flake" as remnants from recycled PET bottles) from the higher specific gravity PET flakes. In particular embodiments, the flakes are washed in a heated caustic bath to about 190 degrees Fahrenheit. In particular embodiments, the caustic bath is maintained at a concentration of between about 0.6% and about 1.2% sodium hydroxide. In various embodiments, soap surfactants as well as defoaming agents are added to the caustic bath, for example, to further increase the separation and cleaning of the flakes. A double rinse system then washes the caustic from the flakes.

In various embodiments, the flake is centrifugally dewatered and then dried with hot air to at least substantially remove any surface moisture. The resultant "clean flake" is then processed through an electrostatic separation system (e.g., an electrostatic separator from Carpco, Inc. of Jacksonville, Florida) and a flake metal detection system (e.g., an MSS Metal Sorting System) to further remove any metal contaminants that remain in the flake. In particular embodiments, an air separation step removes any remaining label from the clean flake. In various embodiments, the flake is then taken through a flake color sorting step (e.g., using an OPTIMIX machine from TSM Control Systems of Dundalk, Ireland) to remove any remaining color contaminants remaining in the flake. In various embodiments, an electro-optical flake sorter based at least in part on Raman technology (e.g., a Powersort 200 from Unisensor Sensorsysteme GmbH of Karlsruhe, Germany) performs the final polymer separation to remove any non-PET polymers remaining in the flake. This step may also further remove any remaining metal contaminants and color contaminants.

In various embodiments, the combination of these steps delivers substantially clean (e.g., clean) PET bottle flake comprising less than about 50 parts per million PVC (e.g., 25 ppm PVC) and less than about 15 parts per million metals for use in the downstream extrusion process described below.

### C. Identifying and Removing Impurities and Impure Flakes

In particular embodiments, after the flakes are washed, they are fed down a conveyor and scanned with a high-speed laser system **300.** In various embodiments, particular lasers that make up the high-speed laser system **300** are configured to detect the presence of particular contaminates (e.g., PVC or Aluminum). Flakes that are identified as not consisting essentially of PET may be blown from the main stream of flakes with air jets. In various embodiments, the resulting level of non-PET flakes is less than 25 ppm.

In various embodiments, the system is adapted to ensure that the PET polymer being processed into filament is substantially free of water (e.g., entirely free of water). In a particular embodiment, the flakes are placed into a pre-conditioner for between about 20 and about 40 minutes (e.g., about 30 minutes) during which the pre-conditioner blows the surface water off of the flakes. In particular embodiments, interstitial water remains within the flakes. In various embodiments, these "wet" flakes (e.g., flakes comprising interstitial water) may then be fed into an extruder (e.g., as described in Step 2 below), which includes a vacuum setup designed to remove - among other things - the interstitial water that remains present in the flakes following the quick-drying process described above.

### STEP 2: Using an Extrusion System to Melt and Purify PET Flakes

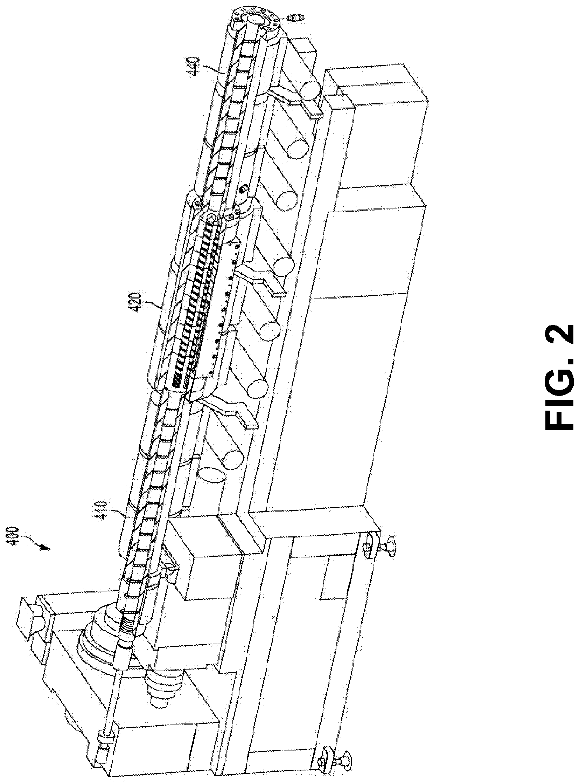

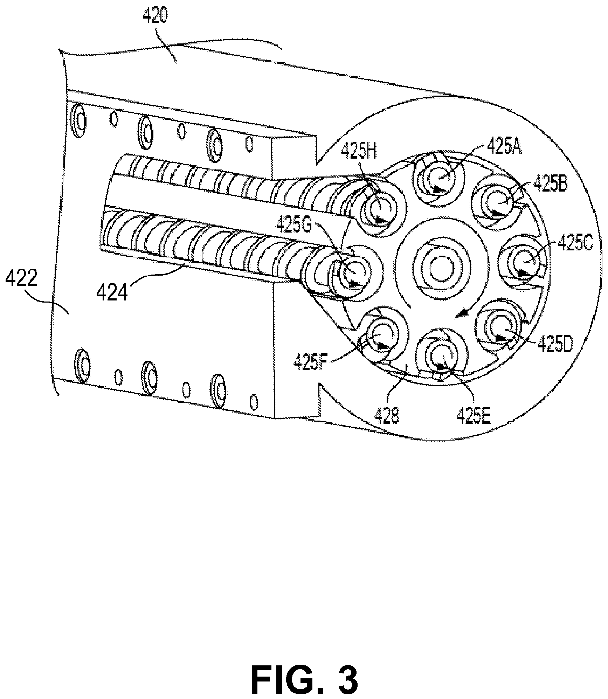

In particular embodiments, an extruder is used to turn the wet flakes described above into a molten recycled PET polymer and to perform a number of purification processes to prepare the polymer to be turned into BCF for carpet. As noted above, in various embodiments, after STEP 1 is complete, the recycled PET polymer flakes are wet (e.g., surface water is substantially removed (e.g., fully removed) from the flakes, but interstitial water remains in the flakes). In particular embodiments, these wet flakes are fed into a Multiple Rotating Screw ("MRS") extruder **400.** In other embodiments, the wet flakes are fed into any other suitable extruder (e.g., a twin screw extruder, a multiple screw extruder, a planetary extruder, or any other suitable extrusion system). An exemplary MRS Extruder **400** is shown in Figures 2 and 3. A particular example of such an MRS extruder is described in U.S. Published Patent Application 2005/0047267, entitled "Extruder for Producing Molten Plastic Materials", which was published on March 3, 2005.

As may be understood from this figure, in particular embodiments, the MRS extruder includes a first single-screw extruder section **410** for feeding material into an MRS section **420** and a second single-screw extruder section **440** for transporting material away from the MRS section.

In various embodiments, the wet flakes are fed directly into the MRS extruder **400** substantially immediately (e.g., immediately) following the washing step described above (e.g., without drying the flakes or allowing the flakes to dry). In particular embodiments, a system that feeds the wet flakes directly into the MRS Extruder **400** substantially immediately (e.g., immediately) following the washing step described above may consume about 20% less energy than a system that substantially fully pre-dries the flakes before extrusion (e.g., a system that pre-dries the flakes by passing hot air over the wet flakes for a prolonged period of time). In various embodiments, a system that feeds the wet flakes directly into the MRS Extruder **400** substantially immediately (e.g., immediately) following the washing step described above avoids the need to wait a period of time (e.g., up to eight hours) generally required to fully dry the flakes (e.g., remove all of the surface and interstitial water from the flakes).

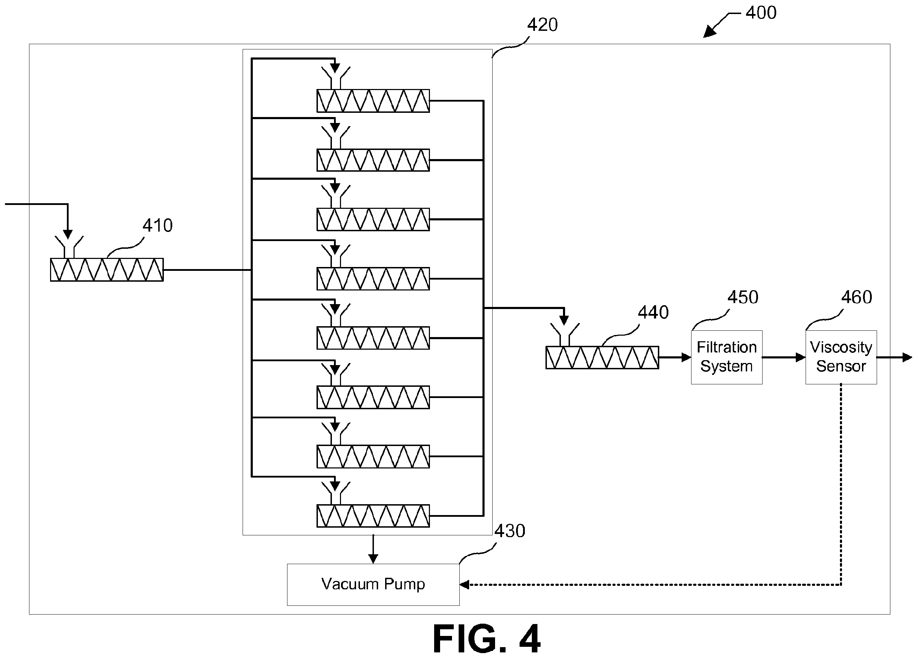

Figure 4 depicts a process flow that illustrates the various processes performed by the MRS Extruder **400** in a particular embodiment. In the embodiment shown in this figure, the wet flakes are first fed through the MRS extruder's first single-screw extruder section **410,** which may, for example, generate sufficient heat (e.g., via shearing) to at least substantially melt (e.g., melt) the wet flakes.

The resultant polymer melt (e.g., comprising the melted flakes), in various embodiments, is then fed into the extruder's MRS section **420,** in which the extruder separates the melt flow into a plurality of different streams (e.g., 4, 6, 8, or more streams) through a plurality of open chambers. Figure 3 shows a detailed cutaway view of an MRS Section **420** according to a particular embodiment. In particular embodiments, such as the embodiment shown in this figure, the MRS Section **420** separates the melt flow into eight different streams, which are subsequently fed through eight satellite screws **425A-H.** As may be understood from Figure 2, in particular embodiments, these satellite screws are substantially parallel (e.g., parallel) to one other and to a primary screw axis of the MRS Machine **400.**

In the MRS section **420,** in various embodiments, the satellite screws **425A-H** may, for example, rotate faster than (e.g., about four times faster than) in previous systems. As shown in Figure 3, in particular embodiments: (1) the satellite screws **425A-H** are arranged within a single screw drum **428** that is mounted to rotate about its central axis; and (2) the satellite screws **425AH** are configured to rotate in a direction that is opposite to the direction in which the single screw drum rotates **428.** In various other embodiments, the satellite screws **425A-H** and the single screw drum **428** rotate in the same direction. In particular embodiments, the rotation of the satellite screws **425A-H** is driven by a ring gear. Also, in various embodiments, the single screw drum **428** rotates about four times faster than each individual satellite screw **425A-H.** In certain embodiments, the satellite screws **425A-H** rotate at substantially similar (e.g., the same) speeds.

In various embodiments, as may be understood from Figure 4, the satellite screws **425AH** are housed within respective extruder barrels, which may, for example be about 30% open to the outer chamber of the MRS section **420.** In particular embodiments, the rotation of the satellite screws **425A-H** and single screw drum **428** increases the surface exchange of the polymer melt (e.g., exposes more surface area of the melted polymer to the open chamber than in previous systems). In various embodiments, the MRS section **420** creates a melt surface area that is, for example, between about twenty and about thirty times greater than the melt surface area created by a co-rotating twin screw extruder. In a particular embodiment, the MRS section **420** creates a melt surface area that is, for example, about twenty five times greater than the melt surface area created by a co-rotating twin screw extruder

In various embodiments, the MRS extruder's MRS Section **420** is fitted with a Vacuum Pump **430** that is attached to a vacuum attachment portion **422** of the MRS section **420** so that the Vacuum Pump **430** is in communication with the interior of the MRS section via a suitable opening **424** in the MRS section's housing. In still other embodiments, the MRS Section **420** is fitted with a series of Vacuum Pumps. In particular embodiments, the Vacuum Pump **430** is configured to reduce the pressure within the interior of the MRS Section **420** to a pressure that is between about 0.5 millibars and about 5 millibars. In particular embodiments, the Vacuum Pump **430** is configured to reduce the pressure in the MRS Section **420** to less than about 1.5 millibars (e.g., about 1 millibar or less). The low-pressure vacuum created by the Vacuum Pump **430** in the MRS Section **420** may remove, for example: (1) volatile organics present in the melted polymer as the melted polymer passes through the MRS Section **420;** and/or (2) at least a portion of any interstitial water that was present in the wet flakes when the wet flakes entered the MRS Extruder **400.** In various embodiments, the low-pressure vacuum removes substantially all (e.g., all) of the water and contaminants from the polymer stream.

In a particular example, the Vacuum Pump **430** comprises three mechanical lobe vacuum pumps (e.g., arranged in series) to reduce the pressure in the chamber to a suitable level (e.g., to a pressure of about 1.0 millibar). In other embodiments, rather than the three mechanical lobe vacuum pump arrangement discussed above, the Vacuum Pump **430** includes a jet vacuum pump fit to the MRS extruder. In various embodiments, the jet vacuum pump is configured to achieve about 1 millibar of pressure in the interior of the MRS section **420** and about the same results described above regarding a resulting intrinsic viscosity of the polymer melt. In various embodiments, using a jet vacuum pump can be advantageous because jet vacuum pumps are steam powered and therefore substantially self-cleaning (e.g., self-cleaning), thereby reducing the maintenance required in comparison to mechanical lobe pumps (which may, for example, require repeated cleaning due to volatiles coming off and condensing on the lobes of the pump). In a particular embodiment, the Vacuum Pump **430** is a jet vacuum pump is made by Arpuma GmbH of Bergheim, Germany.

In particular embodiments, after the molten polymer is run the through the multi-stream MRS Section **420,** the streams of molten polymer are recombined and flow into the MRS extruder's second single screw section **440.** In various embodiments, the single stream of molten polymer is next run through a filtration system **450** that includes at least one filter. In a particular embodiment, the filtration system **450** includes two levels of filtration (e.g., a 40 micron screen filter followed by a 25 micron screen filter). Although, in various embodiments, water and volatile organic impurities are removed during the vacuum process as discussed above, particulate contaminates such as, for example, aluminum particles, sand, dirt, and other contaminants may remain in the polymer melt. Thus, this filtration step may be advantageous in removing particulate contaminates (e.g., particulate contaminates that were not removed in the MRS Section **420**).

In particular embodiments, a viscosity sensor **460** (see Figure 4) is used to sense the melt viscosity of the molten polymer stream following its passage through the filtration system **450.** In various embodiments, the viscosity sensor **460,** measures the melt viscosity of the stream, for example, by measuring the stream's pressure drop across a known area. In particular embodiments, in response to measuring an intrinsic viscosity of the stream that is below a predetermined level (e.g., below about 0.8 g/dL), the system may: (1) discard the portion of the stream with low intrinsic viscosity; and/or (2) lower the pressure in the MRS Section **420** in order to achieve a higher intrinsic viscosity in the polymer melt. In particular embodiments, decreasing the pressure in the MRS Section **420** is executed in a substantially automated manner (e.g., automatically) using the viscosity sensor in a computer-controlled feedback control loop with the vacuum section **430.**

In particular embodiments, removing the water and contaminates from the polymer improves the intrinsic viscosity of the recycled PET polymer by allowing polymer chains in the polymer to reconnect and extend the chain length. In particular embodiments, following its passage through the MRS Section **420** with its attached Vacuum Pump **430,** the recycled polymer melt has an intrinsic viscosity of at least about 0.79 dL/g (e.g., of between about 0.79 dL/g and about 1.00 dL/g). In particular embodiments, passage through the low pressure MRS Section **420** purifies the recycled polymer melt (e.g., by removing the contaminants and interstitial water) and makes the recycled polymer substantially structurally similar to (e.g., structurally the same as) pure virgin PET polymer. In particular embodiments, the water removed by the vacuum includes both water from the wash water used to clean the recycled PET bottles as described above, as well as from unreacted water generated by the melting of the PET polymer in the single screw heater **410** (e.g., interstitial water). In particular embodiments, the majority of water present in the polymer is wash water, but some percentage may be unreacted water.

In particular embodiments, the resulting polymer is a recycled PET polymer (e.g., obtained 100% from post-consumer PET products, such as PET bottles or containers) having a polymer quality that is suitable for use in producing PET carpet filament using substantially only (e.g., only) PET from recycled PET products.

### Step 3: Purified PET Polymer Fed into Spinning Machine to be Turned into Carpet Yarn

In particular embodiments, after the recycled PET polymer has been extruded and purified by the above-described extrusion process, the resulting molten recycled PET polymer is fed directly into a BCF (or "spinning") machine **500** that is configured to turn the molten polymer into bulked continuous filament. For example, in various embodiments, the output of the MRS extruder **400** is connected substantially directly (e.g., directly) to the input of the spinning machine **500** so that molten polymer from the extruder is fed directly into the spinning machine **500.** This process maybe advantageous because molten polymer may, in certain embodiments, not need to be cooled into pellets after extrusion (as it would need to be if the recycled polymer were being mixed with virgin PET polymer). In particular embodiments, not cooling the recycled molten polymer into pellets serves to avoid potential chain scission in the polymer that might lower the polymer's intrinsic viscosity.

In particular embodiments, the spinning machine **500** extrudes molten polymer through small holes in a spinneret in order to produce carpet yarn filament from the polymer. In particular embodiments, the molten recycled PET polymer cools after leaving the spinneret. The carpet yarn is then taken up by rollers and ultimately turned into filaments that are used to produce carpet. In various embodiments, the carpet yarn produced by the spinning machine **500** may have a tenacity between about 3 gram-force per unit denier (gf/den) and about 9 gf/den. In particular embodiments, the resulting carpet yarn has a tenacity of at least about 3 gf/den.

In particular embodiments, the spinning machine **500** used in the process described above is the Sytec One spinning machine manufactured by Oerlika Neumag of Neumuenster, Germany. The Sytec One machine may be especially adapted for hard-to-run fibers, such as nylon or solution-dyed fibers, where the filaments are prone to breakage during processing. In various embodiments, the Sytec One machine keeps the runs downstream of the spinneret as straight as possible, uses only one threadline, and is designed to be quick to rethread when there are filament breaks.

Although the example described above describes using the Sytec One spinning machine to produce carpet yarn filament from the polymer, it should be understood that any other suitable spinning machine may be used. Such spinning machines may include, for example, any suitable one-threadline or three-threadline spinning machine made by Oerlika Neumag of Neumuenster, Germany or any other company.

In various embodiments, the improved strength of the recycled PET polymer generated using the process above allows it to be run at higher speeds through the spinning machine **500** than would be possible using pure virgin PET polymer. This may allow for higher processing speeds than are possible when using virgin PET polymer.

### Summary of Exemplary Process

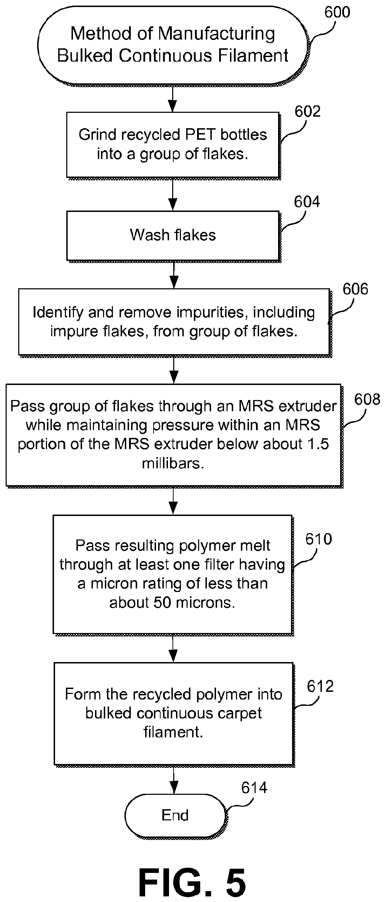

Figure 5 provides a high-level summary of the method of manufacturing bulked continuous filament described above. As shown in the figure, the method begins at Step **602,** where recycled PET bottles are ground into a group of flakes. Next, at Step **604,** the group of flakes is washed to remove contaminants from the flakes' respective outer surfaces. Next, at Step **606,** the group of flakes is scanned (e.g., using one or more of the methods discussed above) to identify impurities, including impure flakes. These impurities, and impure flakes, are then removed from the group of flakes.

Next, at Step **608,** the group of flakes is passed through an MRS extruder while maintaining the pressure within an MRS portion of the extruder below about 1.5 millibars. At Step **610,** the resulting polymer melt is passed through at least one filter having a micron rating of less than about 50 microns. Finally, at Step **612,** the recycled polymer is formed into bulked continuous carpet filament, which may be used in producing carpet. The method then ends at Step **614.**

### Alternative Embodiments

In particular embodiments, the system may comprise alternative components or perform alternative processes in order to produce substantially continuous BCF from 100% recycled PET, or other recycled polymer. Exemplary alternatives are discussed below.

### Non-MRS Extrusion System

In particular embodiments, the process may utilize a polymer flow extrusion system other than the MRS Extruder described above. The alternative extrusion system may include for example, a twin screw extruder, a multiple screw extruder, a planetary extruder, or any other suitable extrusion system. In a particular embodiment, the process may include a plurality of any combination of any suitable conical screw extruders (e.g., four twin screw extruders, three multiple screw extruders, etc.).

### Making Carpet Yarn from 100% Recycled Carpet

In particular embodiments, the process described above may be adapted for processing and preparing old carpet (or any other suitable post-consumer product) to produce new carpet yarn comprising 100% recycled carpet. In such embodiments, the process would begin by grinding and washing recycled carpet rather than recycled PET bottles. In various embodiments where old carpet is converted into new carpet yarn comprising 100% recycled carpet, the process may comprise additional steps to remove additional materials or impurities that may be present in recycled carpet that may not be present in recycled PET bottles (e.g., carpet backing, adhesive, etc.).

### Other Sources of Recycled PET

In various embodiments, the process described above is adapted for processing recycled PET from any suitable source (e.g., sources other than recycled bottles or carpet) to produce new carpet yarn comprising 100% recycled PET.

### The Use of a Crystallizer as Part of BCF Process

According to the invention, the process for producing recycled BCF may further include a crystallizing step that utilizes one or more PET crystallizers. In particular embodiments, the system is configured to perform the crystallization step on the ground flakes prior to running the flakes through the one or more extruders (e.g., single screw extruder, MRS extruder, etc.). further according to the invention the PET crystallizer comprises a housing, a hopper screw (e.g., an auger) disposed at least partially within the housing, a stirring apparatus, one or more heating elements, and one or more blowers.

### Hopper Screw

In particular embodiments, the hopper screw comprises any suitable screw conveyor (e.g., such as an Archimedes' screw) for moving liquid or granular materials (e.g., such as PET flakes). In various embodiments, the hopper screw comprises a substantially cylindrical shaft and a helical screw blade disposed along at least a portion of the cylindrical shaft. In particular embodiments, the substantially cylindrical shaft is configured to rotate the screw blade, causing that hopper screw to move material (e.g., the PET flakes) along the cylindrical shaft and into the crystallizer housing. In other embodiments, the hopper screw comprises any other suitable screw conveyer such as, for example, a shaftless spiral. In embodiments in which the hopper screw comprises a shaftless spiral, the shaftless spiral may be substantially fixed at one end and free at the other end and configured to be driven at the fixed end. In various embodiments, the hopper screw is disposed at least partially within the crystallizer housing.

In various embodiments, the hopper screw is configured to feed PET flakes into the crystallizer. In various embodiments, the PET crystallizer is configured to feed the PET flakes into the crystallizer using the hopper screw relatively slowly.

### One or More Heating Elements

In various embodiments, the crystallizer comprises one or more heating elements for raising a temperature within the crystallizer. In particular embodiments, the one or more heating elements comprise one or more electric heating elements, one or more gas-fired heating elements, or any other suitable heating elements. In some embodiments, the one or more heating elements may be substantially electrically powered. In various embodiments, the one or more heating elements comprise one or more infra-red heating elements. In other embodiments, the one or more heating elements may utilize natural gas such, for example, propane. In particular embodiments, the one or more heating elements are configured to raise a temperature within the crystallizer to between about 100 degrees Fahrenheit and about 180 degrees Fahrenheit. In still other embodiments, the one or more heating elements are configured to raise a temperature within the crystallizer to between about 100 degrees Celsius and 180 degrees Celsius. In some embodiments, the one or more heating elements are configured to maintain a temperature within the crystallizer that is substantially about a maximum crystallization temperature of PET. In particular embodiments, the maximum crystallization temperature of PET is between about 140 degrees Celsius and about 230 degrees Celsius.

### One or More Blowers

In various embodiments, the crystallizer further comprises one or more blowers configured to blow air over the flakes as the flakes passes through the crystallizer. In particular embodiments, the one or more blowers comprise any suitable blowers for moving air substantially across a surface area of the flakes as the flakes pass through the crystallizer. For example, in some embodiments, the one or more blowers comprise one or more suitable fans or other suitable mechanisms for moving air. In various embodiments, the one or more blowers are configured to blow air that has been at least partially heated by the one or more heating elements. In particular embodiments, the one or more blowers are configured to blow air having a temperature of at least about 140 degree Fahrenheit. In another particular embodiments, the one or more blowers are configured to blow air having a temperature of at least about 140 degree Celsius. In other embodiments, the one or more blowers are configured to maintain the temperature in the crystallizer between about 140 degrees Fahrenheit and about 180 degrees Fahrenheit. In some embodiments, the one or more blowers are configured to blow hot air from a bottom portion of the crystallizer and draw air from an upper portion of the crystallizer.

### Stirring Apparatus

In various embodiments, the crystallizer comprises a stirring apparatus that comprises any suitable apparatus for stirring the PET flakes while the PET flakes are passing through the crystallizer. In various embodiments, the stirring apparatus maybe operated, for example, by any suitable gear motor. In a particular embodiment, the stirring apparatus comprises a suitable rod or other suitable mechanism mounted to rotate, or otherwise stir the PET flakes as the PET flakes are passing through the crystallizer. In other embodiments, the stirring apparatus may comprise any suitable tumbler, which may, for example, comprise a drum mounted to rotate via the gear mother such that the PET flakes are at least partially stirred and/or agitated while the PET flakes are within the drum. In still other embodiments, the stirring apparatus comprises one or more screws and/or augers configured to rotate and stir the PET flakes. In particular embodiments, the stirring apparatus comprises the hopper screw.

As may be understood from this disclosure, the stirring apparatus is configured to agitate or stir the PET flakes as the one or more blowers blow air heated by the one or more heating elements across the PET flakes. In particular embodiments, the stirring apparatus is configured to at least partially reduce agglomeration (e.g., sticking or clumping of the flake) while the flake is at least partially crystallizing in the crystallizer.

In particular embodiments, the crystallizer at least partially dries the surface of the PET flakes. In various embodiments, the PET crystallizer is configured to reduce a moisture content of the PET flakes to about 50 ppm. In other embodiments the PET crystallizer is configured to reduce a moisture content of the PET flakes to between about 30 and about 50 ppm.

In various embodiments, the use of drier flakes may enable the system to run the flakes through the MRS extruder more slowly, which may allow for higher pressure within the MRS extruder during extrusion (e.g., may enable the system to maintain a higher pressure within the MRS extruder, rather than very low pressure). In various embodiments of the process, the pressure regulation system may be configured to maintain a pressure within the MRS extruder of between about 0 millibars and about 25 millibars. In particular embodiments, such as embodiments in which the PET flakes have been run through a crystallizer before being extruded in the MRS extruder, the pressure regulation system may be configured to maintain a pressure within the MRS extruder of between about 0 and about 18 millibars. In other embodiments, the pressure regulation system may be configured to maintain a pressure within the MRS extruder between about 0 and about 12 millibars. In still other embodiments, the pressure regulation system may be configured to maintain a pressure within the MRS extruder between about 0 and about 8 millibars. In still other embodiments, the pressure regulation system may be configured to maintain a pressure within the MRS extruder between about 5 millibars and about 10 millibars. In particular embodiments, the pressure regulation system may be configured to maintain a pressure within the MRS extruder at about 5 millibars, about 6 millibars, about 7 millibars, about 8 millibars, about 9 millibars, or about any suitable pressure between about 0 millibars and about 25 millibars.

In particular embodiments, the crystallizer causes the flakes to at least partially reduce in size, which may, for example, reduce a potential for the flakes to stick together. In particular embodiments, the crystallizer may particularly reduce stickiness of larger flakes, which may, for example, include flakes comprising portions of the ground PET bottles which may be thicker than other portions of the PET bottles (e.g., flakes ground from a threaded portion of the PET bottle on which a cap would typically be screwed).

### Use of Curbside Recycling v. Deposit Bottles in Process

In various embodiments, the system is configured to utilize recycled PET of varying quality in the process described above. For example, in various embodiments, the system is configured to produce bulked continuous carpet filament from PET derived from PET bottles sourced from curbside recycling sources (e.g., PET bottles that were collected as part of a general bulk recycling program or other recycling source) as well as deposit PET bottles (e.g., bottles returned as part of a deposit program). In various embodiments, Curbside recycled bottles may require more thorough processing in order to produce bulked continuous filament, as curbside recycled PET bottles may be mixed in with and otherwise include contaminants such as, for example: other recyclable goods (e.g., paper, other plastics, etc.), garbage, and other non-PET bottle items due to imperfect sorting of recycled goods or for any other reason. Deposit PET bottles may include PET bottles with fewer unwanted contaminants due in part because deposit PET bottles may be collected separately from other recyclable or disposable goods.

In various embodiments, curbside recycled PET bottles acquired during particular times of year may include more impurities and other contaminants than at other times of the year. For example, curbside recycled PET bottles collected during summer months may comprise a higher percentage of clear PET bottles (e.g., water bottles) at least in part due to additional water consumption during summer months.

In various embodiments, the system described above maybe configured to adjust particular components of the process based at least in part on the source of recycled PET being used to produce the bulked continuous carpet filament. For example, because deposit PET bottles include fewer impurities that need to be removed during the initial cleaning and sorting phases of the process, the pressure regulation system may be configured to maintain a pressure within the MRS extruder that is higher than a pressure that it would be configured to maintain for PET flake derived from curbside recycled PET bottles. In a particular embodiment, the pressure regulation system may be configured to maintain a pressure within the MRS extruder of between about 0 millibars and about 12 millibars when flakes derived from deposit PET bottles are passing through the MRS extruder. In still other embodiments, the pressure regulation system may be configured to maintain a pressure within the MRS extruder of between about 5 millibars and about 10 millibars in such instances.

In various embodiments, the system is configured to determine a suitable pressure at which to maintain the pressure within the MRS extruder based at least in part on the source of the recycled PET. In other embodiments, the system is configured to omit one or more of the steps above or include one or more additional steps to the steps described above based at least in part on the source of the recycled PET.

### Direct Coupling of Various Process Components

### Direct Coupling of MRS Extruder to Spinning Machine

In particular embodiments, the output of the MRS machine may be substantially directly coupled (e.g., directly coupled) to a spinning machine for forming the resulting molten polymer into bulked continuous filament. In such embodiments, after the recycled PET polymer has been extruded and purified by the above-described extrusion process, the resulting molten recycled PET polymer is fed substantially directly (e.g., directly) into the spinning machine. This process may be advantageous because molten polymer may, in certain embodiments, not need to be cooled into pellets after extrusion (as it would need to be if the recycled polymer were being mixed with virgin PET polymer) prior to spinning the molten polymer into filament. In particular embodiments, not cooling the recycled molten polymer into pellets serves to avoid potential chain scission in the polymer that might lower the polymer's intrinsic viscosity.

### Direct Coupling of Non-MRS Extruder to Spinning Machine

In various embodiments of the process for recycling PET (e.g., or other polymers) into BCF, the recycled PET flakes are passed through an extruder other than an MRS extruder (e.g., a "first extruder") prior to spinning the resultant molten polymer into BCF. In particular embodiments, the first extruder is substantially directly coupled (e.g., directly coupled) to the spinning machine (e.g., an outlet of the first extruder is substantially directly coupled to an inlet of the spinning machine). For example, in various embodiments, an outlet of the first extruder is substantially directly coupled (e.g., via a suitable pipe, connector, etc.) to one or more inlets of one or more spinning machines. In particular embodiments, the first extruder may include any suitable expanded surface area extruder. In various embodiments, the first extruder may include, for example, a twin screw extruder, a multiple screw extruder, a planetary extruder, or any other suitable extrusion system (e.g., any other suitable expanded surface area extruder). In various embodiments, the first extruder is any suitable extruder for increasing an amount of surface area of a polymer melt being extruded by the first extruder that is exposed to a low pressure within the first extruder (e.g., a low pressure caused by a pressure regulation system, such as any suitable pressure regulation system described above). In a particular embodiment, the first extruder is an MAS extruder manufactured by Maschinen und Anlagenbau Schulz GmbH of Pucking, Austria.

In various embodiments, the first extruder is a conical co-rotating twin screw extruder. In such embodiments, the first extruder comprises an extruder housing in which two, co-rotating conical screws are disposed (e.g., a first conical screw and a second conical screw). In various embodiments, each conical screw is substantially conical (e.g., conical) such that the screw narrows from a first diameter at a base end of each respective conical screw to a second diameter at a vertex end of each respective conical screw that is less than the first diameter. In various embodiments, each particular conical screw may have any suitable thread or threading. In some embodiments, each conical screw has a substantially uniform (e.g., uniform) thread pitch and thread crest along at least a portion of the conical screw. In other embodiments, thread pitch and crest may at least partially vary along a length of the particular conical screw. In still other embodiments, a difference between a major and minor diameter of the conical screw may vary along a length of the conical screw (e.g., the screw thread may be larger or smaller along particular portions of the conical screw). In a particular embodiment, the pitch of thread of a particular conical screw may decrease along the conical screw from the base portion to the vertex portion. In particular embodiments, the first and second conical screws are substantially structurally identical (e.g., structurally identical).

In particular embodiments, the two conical screws are oriented within the conical twin screw extruder such that the base portion of each screw is disposed adjacent an intake (e.g., inlet) of the conical twin screw extruder, and the vertex portion of each screw is disposed adjacent an outlet of the conical twin extruder. In particular embodiments, a central axis of the first conical screw forms an acute angle with the central axis of the second conical screw. In various embodiments, the first and second conical screws are disposed such that at least a portion of the thread of the first conical screw at least partially mates with (e.g., mates with) at least a portion of the thread of the second conical screw. In other embodiments, at least a portion of the thread of the first conical screw at least partially engages with (e.g., engages with) at least a portion of the thread of the second conical screw

In particular embodiments, the conical twin screw extruder may be configured to at least partially melt the plurality of flakes into a polymer melt. In such embodiments, the conical twin screw extruder may, for example, generate sufficient heat (e.g., via shearing) to at least substantially melt (e.g., melt) the flakes. In particular embodiments, the first extruder is configured to increase a surface area of the polymer melt. In various embodiments, the conical design of the conical twin screw extruder may result in an intake volume that is substantially greater (e.g., greater) than a discharge volume of the conical twin screw extruder. This higher intake volume, in various embodiments, may result in a high volume throughput per revolution of the twin conical screws. In various embodiments, the first extruder is configured to receive a plurality of polymer flakes (e.g., PET flakes) via a first extruder inlet, melt the plurality of flakes into a polymer melt while extruding the plurality of flakes, and pass the resulting polymer melt though an extruder outlet.

In various embodiments, the first extruder comprises a pressure regulation system configured to reduce a pressure within the first extruder. In a particular embodiment, the first extruder is fitted with a suitable vacuum pump such that the vacuum pump is in communication with an interior of the first extruder's housing via a suitable opening in the first extruder's housing. In still other embodiments, the first extruder is fitted with a series of vacuum pumps. In particular embodiments, the vacuum pump is configured to reduce the pressure within the interior of the first extruder to a pressure that is between about Omillibars and about 25 millibars. In other embodiments, the vacuum pump is configured to reduce a pressure within the first extruder to between about 5 millibars and about 18 millibars. In still other embodiments, the vacuum pump is configured to reduce a pressure within the first extruder to any particular suitable pressure between about 0 millibars and about 25 millibars. In various embodiments, the low-pressure vacuum created by the vacuum pump in the first extruder may remove, for example: (1) volatile organics present in the melted polymer as the melted polymer passes through the first extruder; and/or (2) at least a portion of any interstitial water that was present in the wet flakes when the wet flakes entered the first extruder. In various embodiments, the low-pressure vacuum removes substantially all (e.g., all) of the water and contaminants from the polymer stream. In various embodiments, the vacuum pump may include any suitable vacuum pump, such as any vacuum pump described above or any other suitable vacuum pump.

In embodiments in which the system includes a first extruder directly coupled to the spinning machine, the process may include passing the plurality of flakes (e.g., a plurality of wet flakes after a washing step) through the first extruder to at least partially melt the plurality of flakes into a polymer melt and remove at least a portion of the impurities from the polymer melt. The polymer melt is then fed substantially directly (e.g., directly) into the spinning machine for spinning into bulked continuous carpet filament.

### Conclusion

Many modifications and other embodiments of the invention will come to mind to one skilled in the art to which this invention pertains having the benefit of the teachings presented in the foregoing descriptions and the associated drawings. For example, although the vacuum system discussed above is described as being configured to maintain the pressure in the open chambers of the MRS extruder to about 1 mbar, in other embodiments, the vacuum system may be adapted to maintain the pressure in the open chambers of the MRS extruder at pressures greater than, or less than, 1 mbar. For example, the vacuum system may be adapted to maintain this pressure at between about 0.5 mbar and about 12 mbar.

Similarly, although various embodiments of the systems described above may be adapted to produce carpet filament from substantially only recycled PET (so the resulting carpet filament would comprise, consist of, and/or consist essentially of recycled PET), in other embodiments, the system may be adapted to produce carpet filament from a combination of recycled PET and virgin PET. The resulting carpet filament may, for example, comprise, consist of, and/or consist essentially of between about 80% and about 100% recycled PET, and between about 0% and about 20% virgin PET.

Also, while various embodiments are discussed above in regard to producing carpet filament from PET, similar techniques may be used to produce carpet filament from other polymers. Similarly, while various embodiments are discussed above in regard to producing carpet filament from PET, similar techniques may be used to produce other products from PET or other polymers.

In addition, it should be understood that various embodiments may omit any of the steps described above or add additional steps.

In light of the above, it is to be understood that the invention is not to be limited to the specific embodiments disclosed and that modifications and other embodiments are intended to be included within the scope of the appended claims. Although specific terms are employed herein, they are used in a generic and descriptive sense only and not for the purposes of limitation.

## Claims

1. A method of manufacturing bulked continuous carpet filament, said method comprising:
(A) providing a first extruder, said first extruder comprising:
a first extruder inlet and a first extruder outlet; and
a pressure regulation system that is adapted to maintain a pressure within said first extruder below about 18 millibars;
(B) using said pressure regulation system to reduce a pressure within said first extruder to below about 18 millibars;
(C) while maintaining said pressure within said first extruder below about 18 millibars, passing a plurality of flakes of recycled PET through said first extruder via said first extruder inlet to at least partially melt said plurality of flakes into a polymer melt;
(D) providing at least one spinning machine comprising at least one spinning machine inlet, wherein said at least one spinning machine inlet is substantially directly coupled to said first extruder outlet;
(E) after said step of passing said polymer melt through said first extruder, substantially immediately forming said polymer melt into bulked continuous carpet filament using said at least one spinning machine,
wherein said first extruder is a conical co-rotating twin screw extruder and comprises a first conical screw and a second conical screw, said method further comprising:
providing a PET crystallizer; wherein the PET crystallizer comprises a housing, a hopper screw disposed at least partially within the housing, a stirring apparatus, one or more heating elements and one or more blowers configured to blow air over the flakes as the flakes pass through the crystallizer; and
prior to passing said plurality of flakes of recycled PET through said first extruder, passing said plurality of flakes of recycled PET through said PET crystallizer to at least partially dry a surface of said plurality of flakes of recycled PET, wherein the one or more blowers are moving air substantially across a surface area of the flakes as the flakes pass through the crystallizer.

2. The method of Claim 1, wherein said first conical screw and said second conical screw are configured to at least partially melt said plurality of flakes into said polymer melt through shearing.

3. The method of Claim 2, wherein a central axis of said first conical screw forms an acute angle with a central axis of said second conical screw.

4. The method of Claim 3, wherein a vertex end of said first conical screw is disposed adjacent a vertex end of said second conical screw.

5. The method of Claim 4, wherein said vertex end of said first conical screw and said vertex end of said second conical screw are disposed adjacent said first extruder output.

6. The method of Claim 5, wherein at least a portion of a thread of said first conical screw at least partially mates with and at least partially engages at least a portion of a thread of said second conical screw.

7. The method of any of the preceding claims, wherein said crystallizer is configured to reduce a moisture content of said plurality of flakes to between about 30 ppm and about 50 ppm.

8. The method of any of the preceding claims, wherein said one or more heating elements are configured for raising a temperature within the crystallizer to between 100°C and 180°C.

9. The method of any of claims 1 to 7, wherein said one or more heating elements are configured to maintain a temperature within the crystallizer that is substantially about a maximum crystallization temperature of PET, wherein the maximum crystallization temperature of PET is between about 140°C and about 230°C.

10. The method of any of the preceding claims, wherein said one or more blowers are configured to blow air that has been heated by the one or more heating elements.

11. The method of any of the preceding claims, wherein said one or more blowers are configured to blow hot air from a bottom portion of the crystallizer and draw air from an upper portion of the crystallizer.

12. The method of any of the preceding claims, wherein said stirring apparatus is configured to agitate the PET flakes as the one or more blowers blow air heated by the one or more heating elements across the flakes.

13. The method of any of the preceding claims, wherein the crystallizer causes the flakes to at least partially reduce in size.

14. The method of any of the preceding claims, wherein said spinning machine is a one-threadline or three-threadline spinning machine.

15. The method of any of the preceding claims, wherein said bulked continuous carpet filament comprises of between about 80% and about 100% recycled PET.

## Patentansprüche

1. Verfahren zur Herstellung von gebauschtem Endlos-Teppichfilament, wobei das Verfahren umfasst:
(A) Bereitstellen eines ersten Extruders, wobei der erste Extruder umfasst:
einen ersten Extrudereinlass und einen ersten Extruderauslass; und
ein Druckregulationssystem, das dafür ausgelegt ist, einen Druck in dem ersten Extruder unter etwa 18 Millibar zu halten;
(B) Verwenden des Druckregulationssystems zum Verringern des Drucks in dem ersten Extruder auf unter etwa 18 Millibar;
(C) unter Halten des Drucks in dem ersten Extruder unter etwa 18 Millibar Führen einer Vielzahl von Flocken von recyceltem PET durch den ersten Extruder über den ersten Extrudereinlass, um die Vielzahl von Flocken wenigstens teilweise zu einer Polymerschmelze zu schmelzen;
(D) Bereitstellen wenigstens einer Spinnmaschine, die wenigstens einen Spinnmaschineneinlass umfasst, wobei der wenigstens eine Spinnmaschineneinlass im Wesentlichen direkt an den ersten Extruderauslass gekoppelt ist;
(E) nach dem Schritt des Führens der Polymerschmelze durch den ersten Extruder im Wesentlichen sofortiges Formen der Polymerschmelze zu gebauschtem Teppich-Endlosfilament unter Verwendung der wenigstens einen Spinnmaschine,
wobei der erste Extruder ein konischer gleichlaufender Doppelschneckenextruder ist und eine erste konische Schnecke und eine zweite konische Schnecke umfasst, wobei das Verfahren ferner umfasst:
Bereitstellen eines PET-Kristallisators, wobei der PET-Kristallisator ein Gehäuse, eine Füllschnecke, die wenigstens teilweise in dem Gehäuse angeordnet ist, eine Rührvorrichtung, ein oder mehrere Heizelemente und ein oder mehrere Gebläse, die zum Blasen von Luft über die Flocken während des Durchtretens der Flocken durch den Kristallisator gestaltet ist, umfasst; und
Vor dem Führen der Vielzahl von Flocken von recyceltem PET durch den ersten Extruder Führen der Vielzahl von Flocken von recyceltem PET durch den PET-Kristallisator, um eine Oberfläche der Vielzahl von Flocken von recyceltem PET wenigstens teilweise zu trocknen, wobei das eine oder die mehreren Gebläse während des Durchtretens der Flocken durch den Kristallisator Luft im Wesentlichen über eine Oberfläche der Flocken bewegt.

2. Verfahren gemäß Anspruch 1, wobei die erste konische Schnecke und die zweite konische Schnecke dafür gestaltet sind, die Vielzahl von Flocken durch Scherung wenigstens teilweise zu der Polymerschmelze zu schmelzen.

3. Verfahren gemäß Anspruch 2, wobei die Mittelachse der ersten konischen Schnecke einen spitzen Winkel mit der Mittelachse der zweiten konischen Schnecke bildet.

4. Verfahren gemäß Anspruch 3, wobei ein Scheitelende der ersten konischen Schnecke benachbart zu einem Scheitelende der zweiten konischen Schnecke angeordnet ist.

5. Verfahren gemäß Anspruch 4, wobei das Scheitelende der ersten konischen Schnecke und das Scheitelende der zweiten konischen Schnecke benachbart zu dem ersten Extruderausgang angeordnet sind.

6. Verfahren gemäß Anspruch 5, wobei wenigstens ein Teil eines Gewindegangs der ersten konischen Schnecke wenigstens teilweise mit wenigstens einem Teil eines Gewindegangs der zweiten konischen Schnecke zusammenpasst und wenigstens teilweise damit in Eingriff steht.

7. Verfahren gemäß einem der vorstehenden Ansprüche, wobei der Kristallisator dafür gestaltet ist, den Feuchtegehalt der Vielzahl von Flocken auf zwischen 30 ppm und 50 ppm zu verringern.

8. Verfahren gemäß einem der vorstehenden Ansprüche, wobei das eine oder die mehreren Heizelemente dafür gestaltet sind, eine Temperatur in dem Kristallisator auf zwischen 100 °C und 180 °C zu erhöhen.

9. Verfahren gemäß einem der Ansprüche 1 bis 7, wobei das eine oder die mehreren Heizelemente dafür gestaltet sind, eine Temperatur in dem Kristallisator aufrechtzuhalten, die im Wesentlichen um eine höchste Kristallisationstemperatur von PET liegt, wobei die höchste Kristallisationstemperatur von PET zwischen etwa 140 °C und 230 °C liegt.

10. Verfahren gemäß einem der vorstehenden Ansprüche, wobei das eine oder die mehreren Gebläse dafür gestaltet sind, Luft zu blasen, die von dem einen oder den mehreren Heizelementen erhitzt worden ist.

11. Verfahren gemäß einem der vorstehenden Ansprüche, wobei das eine oder die mehreren Gebläse dafür gestaltet sind, heiße Luft von einem unteren Teil des Kristallisators zu blasen und Luft von einem oberen Teil des Kristallisators abzuziehen.

12. Verfahren gemäß einem der vorstehenden Ansprüche, wobei die Rührvorrichtung dafür gestaltet ist, die PET-Flocken zu bewegen, während das eine oder die mehreren Gebläse von dem einen oder den mehreren Heizelementen erhitzte Luft über die Flocken bläst.

13. Verfahren gemäß einem der vorstehenden Ansprüche, wobei der Kristallisator bewirkt, dass die Flocken wenigstens teilweise an Größe abnehmen.

14. Verfahren gemäß einem der vorstehenden Ansprüche, wobei die Spinnmaschine eine Spinnmaschine mit einem Fadenlauf oder mit drei Fadenläufen ist.

15. Verfahren gemäß einem der vorstehenden Ansprüche, wobei das gebauschte Endlos-Teppichfilament zwischen etwa 80 % und etwa 100 % recyceltes PET umfasst.

## Revendications

1. Procédé de fabrication d'un filament continu gonflant pour moquette, ledit procédé comprenant le fait de :
(A) procurer une première extrudeuse, ladite première extrudeuse comprenant :
une entrée de première extrudeuse et une sortie de première extrudeuse ; et
un système de régulation de la pression qui est conçu pour maintenir une pression régnant au sein de ladite première extrudeuse à une valeur qui est inférieure à environ 18 mbar ;
(B) utiliser ledit système de régulation de la pression dans le but de réduire une pression régnant au sein de ladite première extrudeuse à une valeur qui est inférieure à environ 18 mbar ;
(C) tout en maintenant ladite pression régnant au sein de ladite première extrudeuse à une valeur qui est inférieure à environ 18 mbar, faire passer un certain nombre de paillettes de PET recyclé à travers ladite premier extrudeuse en passant par ladite entrée de première extrudeuse à des fins d'une mise en fusion au moins partielle desdites plusieurs paillettes afin d'obtenir une masse fondue polymère ;
(D) procurer au moins une machine de filature qui comprend au moins une entrée de machine de filature ; dans lequel ladite au moins une entrée de machine de filature est couplée de manière essentiellement directe à ladite sortie de première extrudeuse ;
(E) après ladite étape dans laquelle on fait passer ladite masse fondue polymère à travers ladite premier extrudeuse, de manière essentiellement immédiate, transformer ladite masse fondue polymère afin d'obtenir un filament continu gonflant pour moquette en utilisant ladite au moins une machine de filature ;
dans lequel ladite première extrudeuse représente une extrudeuse à double vis rotatives de forme conique et comprend une première vis de forme conique et une deuxième vis de forme conique, ledit procédé comprenant en outre le fait de :
procurer un cristalliseur du PET ; dans lequel le cristalliseur du PET comprend un logement, une vis de trémie qui est disposée au moins en partie au sein du logement, un appareil d'agitation, un ou plusieurs éléments de chauffage et un ou plusieurs ventilateurs qui sont configurés pour souffler de l'air par-dessus les paillettes au cours du passage des paillettes à travers le cristalliseur ; et
avant de faire passer lesdites plusieurs paillettes de PET recyclé à travers ladite premier extrudeuse, faire passer lesdites plusieurs paillettes de PET recyclé à travers ledit cristalliseur du PET dans le but de sécher au moins en partie une surface desdites plusieurs paillettes de PET recyclé ; dans lequel lesdits un ou plusieurs ventilateurs déplacent de l'air de manière essentielle sur une aire de surface des paillettes au fur et à mesure que les paillettes passent à travers le cristalliseur.

2. Procédé selon la revendication 1, dans lequel ladite première vis de forme conique et ladite deuxième vis de forme conique sont configurées pour une mise en fusion au moins partielle desdites plusieurs paillettes afin d'obtenir ladite masse fondue polymère par l'intermédiaire d'un cisaillement.

3. Procédé selon la revendication 2, dans lequel un axe central de ladite première vis de forme conique forme un angle aigu par rapport à un axe central de ladite deuxième vis de forme conique.

4. Procédé selon la revendication 3, dans lequel une extrémité de sommet de ladite première vis de forme conique est disposée en position adjacente à une extrémité de sommet de ladite deuxième vis de forme conique.

5. Procédé selon la revendication 4, dans lequel ladite extrémité de sommet de ladite première vis de forme conique et ladite extrémité de sommet de ladite deuxième vis de forme conique sont disposées en position adjacente à ladite sortie de première extrudeuse.

6. Procédé selon la revendication 5, dans lequel au moins une portion d'un filet de vis de ladite première vis de forme conique correspond au moins en partie à au moins une portion d'un filet de vis de ladite deuxième vis de forme conique et vient s'engrener au moins en partie avec ladite au moins une portion.

7. Procédé selon l'une quelconque des revendications précédentes, dans lequel ledit cristalliseur est configuré pour réduire une teneur en humidité desdites plusieurs paillettes à une valeur entre environ 30 ppm et environ 50 ppm.

8. Procédé selon l'une quelconque des revendications précédentes, dans lequel lesdits un ou plusieurs éléments de chauffage sont configurés pour élever une température au sein du cristalliseur à une valeur entre 100 °C et 180 °C.

9. Procédé selon l'une quelconque des revendications 1 à 7, dans lequel lesdits un ou plusieurs éléments de chauffage sont configurés pour maintenir une température au sein du cristalliseur qui correspond de manière essentielle à environ une température de cristallisation maximale du PET ; dans lequel la température de cristallisation maximale du PET se situe entre environ 140 °C et environ 230 °C.

10. Procédé selon l'une quelconque des revendications précédentes, dans lequel lesdits un ou plusieurs ventilateurs sont configurés pour souffler de l'air qui a été chauffé par l'intermédiaire desdits un ou plusieurs éléments de chauffage.

11. Procédé selon l'une quelconque des revendications précédentes, dans lequel lesdits un ou plusieurs ventilateurs sont configurés pour souffler de l'air chaud à partir d'une portion inférieure du cristalliseur et pour aspirer de l'air à partir d'une portion supérieure du cristalliseur.

12. Procédé selon l'une quelconque des revendications précédentes, dans lequel ledit appareil d'agitation est configuré pour agiter les paillettes de PET lorsque lesdits un ou plusieurs ventilateurs soufflent de l'air qui a été chauffé par lesdits un ou plusieurs éléments de chauffage à travers les paillettes.

13. Procédé selon l'une quelconque des revendications précédentes, dans lequel le cristalliseur fait en sorte que l'on obtient une réduction au moins en partie de la dimension des paillettes.

14. Procédé selon l'une quelconque des revendications précédentes, dans lequel ladite machine de filature représente une machine de filature du type à parcours de fil unique ou du type à trois parcours de fils.

15. Procédé selon l'une quelconque des revendications précédentes, dans lequel ledit filament continu gonflant pour moquette comprend du PET recyclé entre environ 80 % et environ 100 %.
